# EUROPÄISCHE PATENTSCHRIFT

(11) **EP 3 581 469 B1**
(45) Veröffentlichungstag und Bekanntmachung des Hinweises auf die Patenterteilung: **01.11.2023**
(21) Anmeldenummer: 18177388.8
(22) Anmeldetag: 12.06.2018
(51) Int. Cl.: B62D 21/20, B60P 7/08

(54) **NUTZFAHRZEUGCHASSIS MIT EINER AUFNAHME ZUM TEMPORÄREN VERSTAUEN VON LÄNGLICHEN AUSRÜSTUNGSKOMPONENTEN**
COMMERCIAL VEHICLE CHASSIS WITH A PICKUP FOR TEMPORARY STOWAGE OF ELONGATED EQUIPMENT COMPONENTS
CHÂSSIS DE VÉHICULE UTILITAIRE POURVU D'UN LOGEMENT PERMETTANT LE STOCKAGE TEMPORAIRE DE COMPOSANTS DE L'ÉQUIPEMENT ALLONGÉS

(43) Veröffentlichungstag der Anmeldung: 18.12.2019
(73) Patentinhaber: Schmitz Cargobull AG, 48341 Altenberge (DE)
(72) Erfinder: Rathmann, Norbert, 48356 Nordwalde (DE); Yuan, Zhenning, 40235 Düsseldorf (DE); Eikerling, Frank, 48268 Greven (DE)
(74) Vertreter: Cohausz & Florack

(56) Entgegenhaltungen:
- GB-A- 2 523 809
- US-A1- 2007 224 011
- US-A1- 2018 126 896

## Beschreibung

Die Erfindung betrifft ein Nutzfahrzeugchassis, insbesondere eines Lastkraftwagens, Anhängers oder Sattelaufliegers, mit einer Aufnahme zum temporären Verstauen von länglichen Ausrüstungskomponenten während der Fahrt, umfassend wenigstens ein Aufnahmeelement zum Aufnehmen eines Endabschnitts der Ausrüstungskomponenten, wobei das Aufnahmeelement eine seitliche Aufnahmeöffnung zum Einführen und/oder Entnehmen der Ausrüstungskomponenten und wenigstens zwei in unterschiedlichem Abstand zur Aufnahmeöffnung angeordnete Arretierungselemente zum formschlüssigen Arretieren einer Verschlusslasche in wenigstens zwei unterschiedlich weit von der Aufnahmeöffnung beabstandeten Sicherungsstellungen jeweils zum Sichern der Ausrüstungskomponenten gegenüber einem versehentlichen Herausrutschen aus der Aufnahmeöffnung aufweist und wobei die Verschlusslasche von den Sicherungsstellungen in wenigstens eine die Aufnahmeöffnung zum Einführen und/oder Entnehmen der Ausrüstungskomponenten freigebende Freigabestellung und zurück verstellbar ist.

Nutzfahrzeuge der genannten Art sind vornehmlich zum Transport von Gütern, also der zu transportierenden Ladung, im öffentlichen Straßenverkehr vorgesehen. Dabei können die Nutzfahrzeuge selbst motorisch angetrieben sein, wie beispielsweise im Fall von Lastkraftwagen. Die Nutzfahrzeuge können jedoch auch von einer Zugmaschine gezogen werden, wie dies zum Beispiel bei Anhängern oder Sattelaufliegern der Fall ist. Aufnahmen zum temporären Verstauen von länglichen Ausrüstungskomponenten während der Fahrt sind grundsätzlich aus der US 2007/ 224011 A1 und der US 2018/0126896 A1 bekannt.

Unabhängig von der Art des Nutzfahrzeugs weist dieses ein Nutzfahrzeugchassis auf, das typischerweise eine Rahmenstruktur aus Längsträgern und Querträgern umfasst.

Das Nutzfahrzeugchassis ist regelmäßig mit wenigstens einer Achseneinheit, oftmals mit einer Mehrzahl von Achseneinheiten, verbunden. Zudem kann das Nutzfahrzeugchassis andere Baugruppen des Nutzfahrzeugs wie beispielsweise einen Ladeboden tragen, auf dem die zu transportierenden Güter platziert werden können. Das Nutzfahrzeugchassis kann auch einen Aufbau tragen, der einen Laderaum und einen Ladeboden für die Aufnahme der zu transportierenden Güter bereitstellt.

So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Kofferaufbauten umfassen dabei meist aus Paneelen gebildete Seitenwände und Dächer, wobei diese dann eine Kernlage aus einem geschäumten Kunststoff aufweisen können, um die Seitenwände und das Dach für einen Kühltransport thermisch hinreichend zu isolieren. Für die Kühlung ist zudem meist eine Transportkältemaschine, insbesondere an der Stirnwand, vorgesehen.

Neben Kofferaufbauten sind zudem sogenannte Planenaufbauten bekannt, bei denen die Seitenwände und das Dach durch wenigstens eine Planeneinheit verschlossen sind. Die Stirnwand ist bei Planenaufbauten wie bei Kofferaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern. Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Planeneinheit, wobei die Rahmenstruktur durch Rungen getragen wird, die sich wenigstens an den Ecken des Nutzfahrzeugs befinden.

Darüber hinaus ist an dem Nutzfahrzeugchassis oftmals eine Aufnahme befestigt, in der längliche Ausrüstungskomponenten, temporär, insbesondere während der Fahrt, verstaut werden können. Dabei ist die Aufnahme häufig derart unterhalb des Ladebodens des Nutzfahrzeugs angeordnet, dass sie für einen Benutzer einfach und ohne großen Aufwand zu erreichen ist. Als längliche Ausrüstungskomponenten werden solche verstanden, deren Erstreckung in eine Raumrichtung wenigstens zweimal, insbesondere wenigstens viermal, weiter insbesondere wenigstens achtmal, größer ist als in die anderen beiden Raumrichtungen. Es handelt sich also beispielsweise um Aufsatzlatten, Zugstangen zum Verschieben einer Plane oder Rungen jeweils eines Planenaufbaus. Es kommen aber auch Ladungssicherungsmittel oder Leitern in Frage, und zwar unabhängig von der Art des Aufbaus.

Die Aufnahme der bekannten Nutzfahrzeugchassis umfasst meist wenigstens ein Aufnahmeelement. Dieses Aufnahmeelement kann die Ausrüstungskomponenten in Gänze oder auch nur teilweise aufnehmen. Im Falle einer lediglich teilweisen Aufnahme der Ausrüstungskomponenten durch das Aufnahmeelement kommt insbesondere die Aufnahme der Ausrüstungskomponenten in zwei separaten Aufnahmeelementen in Frage. Typischerweise wird im Aufnahmeelement wenigstens ein Endabschnitt, insbesondere ein Abschnitt eines Längsendes, der Ausrüstungskomponenten aufgenommen. Das Aufnahmeelement kann dabei aus einem Metall oder einer Legierung, insbesondere Stahl, gebildet sein. Vorzugsweise umfasst die Aufnahme zusätzlich wenigstens ein zweites Aufnahmeelement, in dem ein anderer Endabschnitt, insbesondere ein Abschnitt des gegenüberliegenden Längsendes, der Ausrüstungskomponenten aufgenommen werden kann. Dann können die Ausrüstungskomponenten zwischen zwei Aufnahmeelementen angeordnet und von den beiden Aufnahmeelementen, insbesondere endseitig, gehalten transportiert werden. Zudem sind die beiden Aufnahmeelemente typischerweise in einer im Wesentlichen horizontalen Ebene einander gegenüberliegend angeordnet, so dass die Aufnahme umfassend die beiden Aufnahmeelemente platzsparend, insbesondere unterhalb des Ladebodens, an dem Chassis befestigt werden kann. Die Ausrüstungskomponenten sind dann vornehmlich horizontal ausgerichtet.

Damit die Ausrüstungskomponenten in die Aufnahme eingeführt und/oder aus der Aufnahme entnommen werden können, weist das Aufnahmeelement eine seitliche Aufnahmeöffnung auf. Anders ausgedrückt kann die Aufnahme durch die seitliche Aufnahmeöffnung beladen und entladen werden. Dabei wird unter einer seitlichen Aufnahmeöffnung vorzugsweise eine solche verstanden, die wenigstens im Wesentlichen zu einer Seite des Nutzfahrzeugs und/oder wenigstens im Wesentlichen in eine horizontale Richtung weist.

Weiterhin umfasst das Aufnahmeelement wenigstens zwei Arretierungselemente, die in unterschiedlichem Abstand zu der Aufnahmeöffnung angeordnet sind. Mit den Arretierungselementen kann eine, vorzugsweise aus einem Metall oder einer Legierung, insbesondere Stahl, gebildete, Verschlusslasche in wenigstens zwei Sicherungsstellungen, also wenigstens in einer je Arretierungselement, formschlüssig arretiert werden. Die Verschlusslasche ist, je nachdem in welcher Sicherungsstellung sie sich befindet, unterschiedlich weit von der Aufnahmeöffnung beabstandet angeordnet. In den Sicherungsstellungen sichert die Verschlusslasche die Ausrüstungskomponenten gegenüber einem versehentlichen Herausrutschen aus der Aufnahmeöffnung. Anders ausgedrückt ist die Verschlusslasche in der Sicherungsstellung derart zwischen der Aufnahmeöffnung und den zu sichernden Ausrüstungskomponenten angeordnet, dass die Verschlusslasche als Anschlag für die zu sichernden Ausrüstungskomponenten in Richtung der Aufnahmeöffnung dient. Wenn sich die Verschlusslasche in den Sicherungsstellungen befindet, sind die Ausrüstungskomponenten also auch während der Fahrt, beispielsweise unter Einwirkung von Fliehkräften, sicher in der Aufnahme gehalten. Dabei können, je nachdem in welcher Sicherungsstellung bzw. mit welchem Arretierungselement die Verschlusslasche arretiert ist, mehr oder weniger Ausrüstungskomponenten in der Aufnahme gesichert werden.

Von den Sicherungsstellungen kann die Verschlusslasche in wenigstens eine Freigabestellung und zurück verstellt werden. In der Freigabestellung gibt die Verschlusslasche die Aufnahmeöffnung frei, so dass die Ausrüstungskomponenten in die Aufnahme eingeführt bzw. aus der Aufnahme entnommen werden können. Wenn sich die Verschlusslasche in der Freigabestellung befindet, kann die Aufnahme also be-und entladen werden. Außerdem kann die Verschlusslasche nach einem Be- oder Entladen über die Freigabestellung in die jeweils wenigstens eine andere Sicherungsstellung verstellt werden.

Das Beladen der Aufnahme mit Ausrüstungskomponenten bzw. das Entladen von Ausrüstungskomponenten aus der Aufnahme ist jedoch noch nicht zufriedenstellend gelöst, da dies aufwendig ist und/oder zu Fehlbedienungen führen kann.

Der vorliegenden Erfindung liegt daher die Aufgabe zugrunde, das Nutzfahrzeugchassis der eingangs genannten und zuvor erläuterten Art derart auszugestalten und weiterzubilden, dass das Handling beim Be-und Entladen der Aufnahme einfacher, schneller und zuverlässiger erfolgen kann.

Diese Aufgabe ist bei einem Nutzfahrzeugchassis nach dem Oberbegriff des Anspruchs 1 dadurch gelöst, dass die Verschlusslasche unverlierbar und zwischen den Sicherungsstellungen verstellbar entlang wenigstens einer Längsführung gehalten ist.

Durch die Längsführung, entlang der die Verschlusslasche unverlierbar und zwischen den Sicherungsstellungen verstellbar gehalten ist, kann die Verschlusslasche einfach und präzise zwischen den einzelnen Stellungen bewegt werden. Zudem ermöglicht die Längsführung, dass die Verschlusslasche von einer der Sicherungsstellungen in die wenigstens eine andere Sicherungsstellung verstellt werden kann, ohne zunächst in die wenigstens eine Freigabestellung bewegt werden zu müssen. Die Verschlusslasche kann folglich einfach und schnell zwischen den wenigstens zwei Sicherungsstellungen verstellt werden. Außerdem kann die Verschlusslasche nicht versehentlich verloren gehen, da diese immer unverlierbar an der Längsführung gehalten sein kann, was das Handling weiter vereinfachen kann.

Bei einer ersten bevorzugten Ausgestaltung des Nutzfahrzeugchassis kann die Verschlusslasche von den Sicherungsstellungen in wenigstens zwei Freigabestellungen und zurück verstellt werden. Je mehr Freigabestellungen verfügbar sind, desto einfacher ist eine Freigabestellung zu erreichen, was das Be-oder Entladen von Ausrüstungskomponenten vereinfacht und beschleunigt.

Zusätzlich kann die Verschlusslasche unverlierbar und zwischen den Freigabestellungen verstellbar entlang einer Längsführung gehalten sein. Dadurch kann die Verstellbarkeit der Verschlusslasche erleichtert und beschleunigt werden. Dabei kann die Verschlusslasche besonders einfach und schnell zwischen den Freigabestellungen verstellt werden, wenn das Verstellen linear und/oder durch Verschieben erfolgt. Zudem ist es aus konstruktiven Gründen zweckmäßig, wenn die Längsführung zum Verstellen der Verschlusslasche zwischen den Freigabestellungen auch der Längsführung zum Verstellen der Verschlusslasche zwischen den Sicherungsstellungen dient.

Alternativ oder zusätzlich kann die Verschlusslasche von den Sicherungsstellungen jeweils in wenigstens eine Zwischenstellung und zurück verstellt werden, in der die Ausrüstungskomponenten ebenfalls gegenüber einem versehentlichen Herausrutschen aus der Aufnahmeöffnung gesichert sind. Dabei ist die Verschlusslasche in den Sicherungsstellungen in wenigstens einer Entsicherungsrichtung formschlüssig arretiert, während diese formschlüssige Arretierung der Verschlusslasche in den Zwischenstellungen aufgehoben ist. Unter der Entsicherungsrichtung wird dabei eine Richtung verstanden, in die die Verschlusslasche wenigstens teilweise, insbesondere im Wesentlichen, bewegt werden muss, um von den Sicherungsstellungen in die wenigstens eine Freigabestellung verstellt werden zu können. Das Verstellen der Verschlusslasche von der Sicherungsstellung in die Freigabestellung erfolgt also über die Zwischenstellung. Ein Herausrutschen der Ausrüstungskomponenten infolge einer versehentlichen geringfügigen Verstellung der Verschlusslasche wird so verhindert, ohne das Handling der Verschlusslasche übermäßig zu beeinträchtigen. Besonders bevorzugt ist es in diesem Zusammenhang folglich, wenn die Verschlusslasche aus den bzw. über die Zwischenstellungen in die wenigstens eine Freigabestellung und zurück verstellt werden kann. Dann kann die Verschlusslasche einfach von den Sicherungsstellungen über die Zwischenstellungen in die wenigstens eine Freigabestellung und entsprechend von der wenigstens einen Freigabestellung über die Zwischenstellungen in die Sicherungsstellungen verstellt werden, ohne dass die Gefahr eines versehentlichen Herausrutschens von Ausrüstungskomponenten in Kauf genommen werden muss.

Einfach und zuverlässig ist es, wenn die Verschlusslasche von den Sicherungsstellungen wenigstens durch Verschieben, Verdrehen und/oder Schwenken in die Zwischenstellungen verstellbar ist. Damit das Verschieben nicht versehentlich erfolgt, kann das Verschieben gegen die Schwerkraft und/oder eine Federkraft erfolgen. Ein einfaches und sicheres Verdrehen wird beispielsweise durch ein Verdrehen um die Längsachse der Verschlusslasche ermöglicht. Die Verschlusslasche gelangt mithin nicht unbeabsichtigt aus einer Sicherungsstellung in eine Zwischenstellung, wobei dies jedoch bewusst sehr einfach herbeigeführt werden kann.

Damit die Verschlusslasche in einfacher Weise von den Zwischenstellungen in die wenigstens eine Freigabestellung bewegt werden kann, erfolgt dieses wenigstens teilweise durch Verschieben, Verdrehen und/oder Schwenken. Auch hier kann ein versehentliches Verstellen durch ein Verschieben gegen die Schwerkraft und/oder eine Federkraft erfolgen. Alternativ oder zusätzlich kann aus demselben Grund das Verdrehen um die Längsachse der Verschlusslasche erfolgen. Die Ausrüstungskomponenten bleiben so zuverlässig gesichert, ohne dass ein aufwendiges und langwieriges Verstellen der Verschlusslasche in Kauf genommen werden muss.

Wenn sich die Verstellbewegungen zum Verstellen der Verschlusslasche von den Sicherungsstellungen in die Zwischenstellungen einerseits und von den Zwischenstellungen in die wenigstens eine Freigabestellung andererseits unterscheiden, wird ein versehentliches Verstellen der Verschlusslasche von den Sicherungsstellungen in die wenigstens eine Freigabestellung vermieden. Grundsätzlich kommt als Verstellbewegung ein Verschieben, Drehen und/oder Schwenken in Frage. Sollten zum Verstellen der Verschlusslasche von den Sicherungsstellungen in die Zwischenstellungen oder von den Zwischenstellungen in die wenigstens eine Freigabestellung mehrere Verstellbewegungen notwendig sein, genügt es, wenn sich zwei Verstellbewegungen unterscheiden. Das Verstellen der Verschlusslasche von der Sicherungsstellung in die Zwischenstellung unterscheidet sich als bevorzugt wenigstens teilweise, d.h. in wenigstens einer von mehreren Verstellbewegungen vom Verstellen der Verschlusslasche von der Zwischenstellung in die Freigabestellung.

Aus demselben Grund können die Verstellbewegungen zum Verstellen der Verschlusslasche von den Sicherungsstellungen in die Zwischenstellungen und von den Zwischenstellungen in die wenigstens eine Freigabestellung wenigstens im Wesentlichen senkrecht zueinander ausgerichtet sein. Auch so wird vermieden, dass die Verschlusslasche von den Sicherungsstellungen unbeabsichtigt in eine die Ausrüstungskomponenten nicht oder nur unzureichend sichernde Stellung gelangt, ohne den Aufwand zum Verstellen der Verschlusslasche für den Benutzer wesentlich zu erhöhen.

Grundsätzlich wird dabei insbesondere eine Verschiebebewegung als senkrecht zu einer Dreh- und/oder Schwenkbewegung verstanden, wenn die Dreh- bzw. Schwenkachse parallel zur Verschieberichtung ausgerichtet ist. Alternativ oder zusätzlich werden Verstellbewegungen als senkrecht zueinander verstanden, wenn die Dreh- und/oder Schwenkachsen von Dreh- und/oder Schwenkbewegungen senkrecht zueinander ausgerichtet sind.

Ein versehentliches Freigeben der Ausrüstungskomponenten zum Herausrutschen aus einer Öffnung einer Aufnahme kann in noch stärkerem Maße verhindert werden, wenn zwischen der Sicherungsstellung und der Zwischenstellung noch eine Verschlussstellung vorgesehen wird, über die das Verstellen aus der Sicherungsstellung in die Zwischenstellung, insbesondere zwangsweise, erfolgt. Dabei kann die Verschlusslasche zur Erhöhung der Zuverlässigkeit in den Verschlussstellungen ebenfalls in der Entsicherungsrichtung arretiert sein. Die Verschlusslasche muss beim Verstellen von den Sicherungsstellungen in die Zwischenstellungen und zurück also bedarfsweise jeweils zuerst in die jeweilige Verschlussstellung verstellt werden, um anschließend in die entsprechende Zwischen- bzw. Sicherungsstellung verstellt werden zu können. Wenn die Verstellbewegungen der Verschlusslasche von der Sicherungsstellung in die Verschlussstellung und von der Verschlussstellung in die Zwischenstellung wenigstens teilweise unterschiedlich zueinander, insbesondere wenigstens im Wesentlichen senkrecht zueinander, ausgerichtet sind, wird die Sicherheit gegen ein unbeabsichtigtes Verstellen der Verschlusslasche von den Sicherungsstellungen in die Zwischenstellungen erhöht, ohne das Verstellen der Verschlusslasche von den Sicherungsstellungen in die Zwischenstellungen für den Benutzer wesentlich zu erschweren.

Hinsichtlich eines einfachen Verstellens der Verschlusslasche bietet es sich an, wenn die Verschlusslasche von den Sicherungsstellungen in die Verschlussstellungen und/oder von den Verschlussstellungen in die Zwischenstellungen wenigstens durch Verschieben, Verdrehen und/oder Schwenken verstellbar ist. Zusätzlich kann dabei das Verschieben gegen die Schwerkraft und/oder eine Federkraft erfolgen, um ein versehentliches Verstellen weiter zu erschweren. Alternativ oder zusätzlich kann aus demselben Grund das Verdrehen um die Längsachse der Verschlusslasche erfolgen. Gleichzeitig wird dem Benutzer ein einfaches Verstellen der Verschlusslasche von der Sicherungsstellung in die Verschlussstellung und/oder von der Verschlussstellung in die Zwischenstellung ermöglicht. Dies ist insbesondere der Fall, wenn das Verstellen der Verschlusslasche von den Sicherungsstellungen in die Verschlussstellungen durch Verschieben der Verschlusslasche gegen die Schwerkraft und von den Verschlussstellungen in die Zwischenstellungen durch Drehen um die Längsachse der Verschlusslasche erfolgen kann.

Zum einfachen Be- und Entladen der Aufnahme kann die Verschlusslasche von der wenigstens einen Freigabestellung in wenigstens eine die Aufnahmeöffnung zum Einführen und/oder Entnehmen der Ausrüstungskomponenten ebenfalls freigebende Haltestellung und zurück verstellbar sein. In der wenigstens einen Haltestellung ist die Verschlusslasche jeweils wenigstens in einer Sicherungsrichtung formschlüssig arretiert, so dass die Verschlusslasche nicht lediglich aufgrund Ihrer Gewichtskraft in eine Stellung gelangen kann, in der die Verschlusslasche das Einführen oder Entnehmen der Ausrüstungskomponenten durch die Aufnahmeöffnung behindert. Mithin wirkt der Formschluss in der Sicherungsstellung vorzugsweise wenigstens teilweise in Richtung der Gewichtskraft. Dabei wird unter der Sicherungsrichtung bedarfsweise eine Richtung verstanden, in die die Verschlusslasche wenigstens teilweise, insbesondere im Wesentlichen, bewegt werden muss, um von der wenigstens einen Freigabestellung in eine Zwischenstellung, Verschlussstellung und/oder Sicherungsstellung zu gelangen. Wenn zusätzlich die formschlüssige Arretierung der Verschlusslasche wenigstens im Wesentlichen in die Sicherungsrichtung in der wenigstens einen Freigabestellung aufgehoben ist, kann die Verschlusslasche in einfacher Weise von der wenigstens einen Haltestellung über die wenigstens eine Freigabestellung in eine Zwischenstellung, Verschlussstellung und/oder Sicherungsstellung verstellt werden.

Damit die Verschlusslasche in einfacher Weise von der Haltestellung in die Freigabestellung bewegt werden kann, kann dies wenigstens teilweise durch Verschieben, Verdrehen und/oder Schwenken erfolgen. Zusätzlich kann dabei das Verschieben gegen die Schwerkraft und/oder eine Federkraft erfolgen. Ebenso kann das Verdrehen um die Längsachse der Verschlusslasche erfolgen. Auf diese Weise wird jeweils verhindert, dass die Verschlusslasche unbeabsichtigt, insbesondere während des Be- und Entladens der Aufnahme von der Haltestellung in die Freigabestellung gelangt, und dennoch ein einfaches Verstellen der Verschlusslasche von der wenigstens einen Haltestellung in die wenigstens eine Freigabestellung für den Benutzer ermöglicht.

Alternativ oder zusätzlich kann die Verschlusslasche von der Freigabestellung in die Haltestellung und zurück wenigstens durch eine Haltebewegung wenigstens im Wesentlichen senkrecht zur Sicherungsrichtung verstellbar sein. Auf diese Weise wird verhindert, dass die Verschlusslasche unbeabsichtigt, insbesondere während des Be-und Entladens der Aufnahme von der Haltestellung in eine Stellung gelangt, in der die Verschlusslasche das Einführen bzw. Entnehmen der Ausrüstungskomponenten durch die Aufnahmeöffnung behindert. Dennoch wird dem Benutzer ein einfaches Verstellen der Verschlusslasche von der wenigstens einen Haltestellung in die Zwischen- bzw. Sicherungsstellungen ermöglicht.

Eine konstruktiv einfache Integration der Längsführung in die Aufnahme, die zugleich eine einfache und präzise Verstellung der Verschlusslasche ermöglicht, lässt sich erreichen, wenn die Längsführung ein in der Aufnahme angeordneter, insbesondere in dem Ausnahmeelement ausgebildeter, und die Verschlusslasche wenigstens teilweise aufnehmender Längsführungsformschlitz ist. Alternativ oder zusätzlich bietet es sich aus demselben Grund an, wenn die Längsführung ein sich durch eine, vorzugsweise als Längsführungsformschlitz ausgebildete, Öffnung der Verschlusslasche erstreckendes Längsführungsprofil ist.

Zusätzlich kann der Längsführungsformschlitz wenigstens eine Verbreiterung zur Aufnahme der Verschlusslasche und/oder des Längsführungsprofils in der wenigstens einen Haltestellung aufweisen. Dann kann eine Formfläche der Verschlusslasche in der Sicherungsrichtung an die Aufnahme, insbesondere das Aufnahmeelement, angelegt werden und die Verschlusslasche derart in der Sicherungsrichtung arretiert werden. So kann auf zusätzliche Mittel zum Arretieren der Verschlusslasche in der Haltestellung in die Sicherungsrichtung verzichtet werden, welche den Konstruktionsaufwand und gegebenenfalls den Platzbedarf der Aufnahme erhöhen würden. Zusätzlich kann der Längsführungsformschlitz je Arretierungselement eine dem jeweiligen Arretierungselement zugeordnete Verbreiterung aufweisen, damit die Verschlusslasche von den Sicherungsstellungen jeweils möglichst einfach und schnell in eine zugeordnete Haltestellung verstellt werden kann.

Alternativ oder zusätzlich kann die Verschlusslasche wenigstens in den Sicherungsstellungen und den Verschlussstellungen formschlüssig in den Arretierungselementen, insbesondere separaten Öffnungen, des Aufnahmeelements aufgenommen sein. Auf diese Weise ist es möglich, die Verschlusslasche in den Sicherungsstellungen und den Verschlussstellungen in einfacher Weise zu arretieren. Aus konstruktiven Gründen kann es zudem zweckmäßig sein, wenn die Arretierungselemente, insbesondere die separaten Öffnungen, der Längsführung gegenüberliegend angeordnet sind.

Damit das Spiel zwischen dem Aufnahmeelement und den darin aufgenommenen Endabschnitten der Ausrüstungskomponenten möglichst gering ist, die Ausrüstungskomponenten aber dennoch problemlos in das Aufnahmeelement eingeführt bzw. aus dem Aufnahmeelement entnommen werden können, kann es zweckmäßig sein, wenn das Aufnahmeelement U-Förmig ausgebildet ist. Auf diese Weise wird weitestgehend verhindert, dass sich die Ausrüstungskomponenten durch während der Fahrt auftretende Kräfte in der Aufnahme übermäßig bewegen. Um die Aufnahme zusätzlich platzsparend auszubilden, kann die Längsführung an einem Schenkel des Aufnahmeelements vorgesehen und/oder die Arretierungselemente, insbesondere die separaten Öffnungen, an einem anderen, insbesondere gegenüberliegenden, Schenkel des Aufnahmeelements angeordnet sein.

Alternativ oder zusätzlich kann die Verschlusslasche wenigstens einen oberen Verjüngungsabschnitt derart aufweisen, so dass die Verschlusslasche im Bereich des wenigstens einen oberen Verjüngungsabschnitts in dem Längsführungsformschlitz um die Längsachse der Verschlusslasche drehbar und wenigstens teilweise, insbesondere in einer Richtung wenigstens im Wesentlichen parallel zur Schwerkraft, formschlüssig am Aufnahmeelement gehalten ist. So kann auf konstruktiv und fertigungstechnisch einfache Weise erreicht werden, dass die Verschlusslasche in dem Längsführungsformschlitz in Abhängigkeit davon, in welcher Stellung sich die Verschlusslasche befindet bzw. welcher Abschnitt der Verschlusslasche in dem Längsführungsformschlitz angeordnet ist, um ihre Längsachse gedreht werden kann oder gegenüber einem solchen Verdrehen blockiert ist. Zudem wird durch die obere Verjüngung ebenfalls auf konstruktiv und fertigungstechnisch einfache Weise eine Anschlagsfläche gebildet, durch die die Verschlusslasche im Bereich des oberen Verjüngungsabschnitts wenigstens teilweise, insbesondere in einer Richtung parallel zur Schwerkraft und/oder in den Sicherungsstellungen, formschlüssig am Aufnahmeelement festgelegt werden kann.

Alternativ oder zusätzlich kann die Verschlusslasche wenigstens einen unteren Verjüngungsabschnitt derart aufweisen, dass die Verschlusslasche im Bereich des wenigstens einen unteren Verjüngungsabschnitts in wenigstens einer separaten Öffnung um die Längsachse der Verschlusslasche drehbar und wenigstens teilweise, insbesondere in einer Richtung parallel zur Schwerkraft, formschlüssig am Aufnahmeelement gehalten ist. So kann auf konstruktiv und fertigungstechnisch einfache Weise erreicht werden, dass die Verschlusslasche in der separaten Öffnung in Abhängigkeit davon, in welcher Stellung sich die Verschlusslasche befindet bzw. welcher Abschnitt der Verschlusslasche in der separaten Öffnung angeordnet ist, um ihre Längsachse gedreht werden kann oder gegenüber einem solchen Verdrehen blockiert ist. Zudem wird durch die untere Verjüngung ebenfalls auf konstruktiv und fertigungstechnisch einfache Weise eine Anschlagsfläche gebildet, durch die die Verschlusslasche im Bereich des unteren Verjüngungsabschnitts wenigstens teilweise, insbesondere in einer Richtung parallel zur Schwerkraft und/oder in den Zwischenstellungen, formschlüssig am Aufnahmeelement gehalten ist.

Alternativ oder zusätzlich kann die Verschlusslasche wenigstens einen oberen Anschlagabschnitt zum wenigstens teilweisen formschlüssigen Halten der Verschlusslasche, insbesondere in einer Richtung parallel zur Schwerkraft, aufweisen. Dieser obere Anschlagabschnitt trägt dazu bei, dass die Verschlusslasche insbesondere beim Verstellen der Verschlusslasche bzw. während des Be- und/oder Entladens der Aufnahme nicht verlorengehen kann. Bei einer besonders einfachen Ausgestaltung der Verschlusslasche kann dieser obere Anschlag stiftförmig zu wenigstens einer Seite der Verschlusslasche vorstehen. Besonders effektiv trägt der obere Anschlagabschnitt jedoch zum unverlierbaren Halten der Verschlusslasche bei, wenn dieser stiftförmig zu zwei gegenüberliegenden Seiten der Verschlusslasche vorsteht. Aus konstruktiven Gründen und um das Verstellen der Verschlusslasche zwischen den verschiedenen Stellungen möglichst nicht zu beeinträchtigen, ist es darüber hinaus bevorzugt, wenn der obere Anschlagabschnitt die Verschlusslasche wenigstens teilweise formschlüssig an einem Randbereich der Längsführung hält.

Ebenfalls zu dem vorgenannten Zweck kann die Verschlusslasche einen unteren Anschlagabschnitt zum wenigstens teilweisen formschlüssigen Halten der Verschlusslasche, insbesondere in einer Richtung parallel zur Schwerkraft, aufweisen. Dabei bietet es sich aus den obenstehenden Gründen ebenfalls an, dass der untere Anschlagabschnitt stiftförmig zu wenigstens einer Seite, insbesondere zu zwei gegenüberliegenden Seiten, der Verschlusslasche vorsteht und/oder die Verschlusslasche wenigstens teilweise formschlüssig an einem Randbereich der Längsführung hält.

Besonders bevorzugt ist es dabei, wenn die Verschlusslasche sowohl einen unteren als auch einen oberen Anschlagabschnitt aufweist. Auf diese Weise ist die Verschlusslasche allein durch die beiden Anschlagabschnitte unverlierbar entlang der Längsführung gehalten, ohne dass weitere Mittel zum Verhindern eines Verlusts der Verschlusslasche erforderlich wären. Besonders effektiv ist es dabei, wenn die Anschlagabschnitte zu gleichen Richtungen gegenüber der Verschlusslasche nach außen vorstehen, und zwar bedarfsweise beidseitig. Die Anschlagabschnitte können durch die Verschlusslasche selbstgebildet werden, etwa durch eine einstückige Ausgestaltung, oder durch stoffschlüssiges Befestigen von Anschlagselementen an der Verschlusslasche hergestellt werden. Besonders einfach herzustellen sind die Anschlagabschnitte jedoch, indem Anschlagelemente, insbesondere in Form von Spannhülsen, in einer Bohrung der Verschlusslasche kraftschlüssig, insbesondere durch eine Pressverbindung, mit der Verschlusslasche verbunden werden.

Hinsichtlich einer effektiven Sicherung der Ausrüstungskomponenten gegenüber einem versehentlichen Herausrutschen aus der Aufnahme kann es vorteilhaft sein, wenn das Aufnahmeelement wenigstens vier, insbesondere wenigstens sechs, weiter insbesondere wenigstens acht, Arretierungselemente aufweist. Dann kann der Benutzer in Abhängigkeit der Anzahl der zu transportierenden Ausrüstungskomponenten eine Sicherungsstellung wählen, in der die Ausrüstungskomponenten möglichst gut in der Aufnahme gesichert sind.

Entgegen der vorstehenden Ausführungen ist es grundsätzlich auch denkbar, die Verschlusslasche in den Sicherungsstellungen und/oder Verschlussstellungen bzw. mit den Arretierungselementen wenigstens teilweise kraftschlüssig, beispielsweise durch eine Feder, zu arretieren. Aus konstruktiven, wartungstechnischen und/oder Kostengründen ist eine rein formschlüssige Arretierung allerdings bevorzugt.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Nutzfahrzeugchassis in einer perspektivischen Ansicht,
- Fig. 2: eine erfindungsgemäße Aufnahme des Nutzfahrzeugchassis aus Fig. 1 in einer perspektivischen Ansicht,
- Fig. 3: ein erfindungsgemäßes Aufnahmeelement der Aufnahme gemäß Fig. 2 in einer perspektivischen Ansicht,
- Fig. 4: eine erfindungsgemäße Verschlusslasche der Aufnahme gemäß Fig. 2 in einer perspektivischen Ansicht,
- Fig. 5A - E: ein Detail der Aufnahme aus Fig. 2 mit einer Verschlusslasche in verschiedenen Stellungen beim Verstellen der Verschlusslasche von einer Sicherungsstellung in eine Freigabestellung in einer perspektivischen Ansicht,
- Fig. 6A - C: das Detail der Aufnahme gemäß Fig. 5 mit der Verschlusslasche in verschiedenen Haltestellungen.

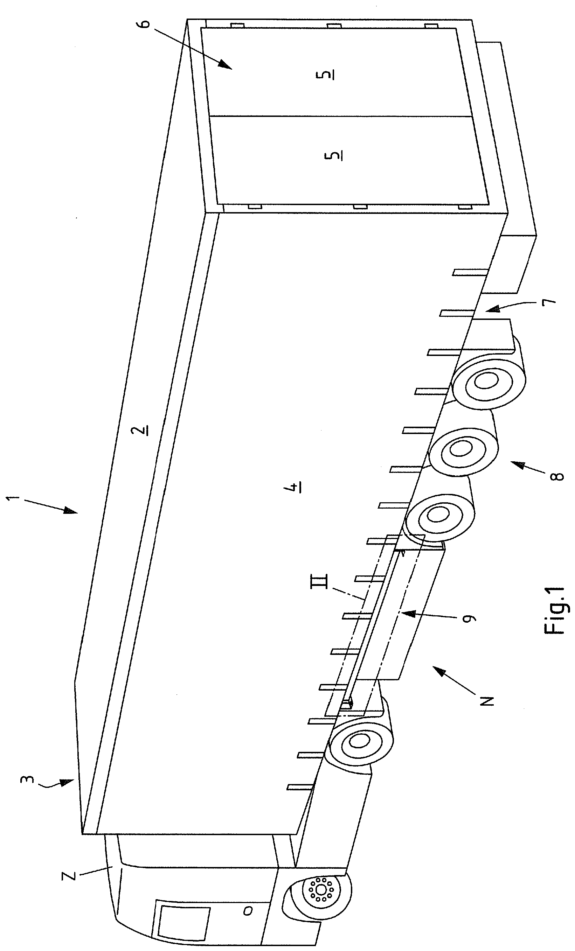

In der Fig. 1 ist ein von einer Zugmaschine Z gezogenes Nutzfahrzeug N in Form eines Sattelaufliegers mit einem Aufbau 1 dargestellt. Der Aufbau 1 umfasst ein Dach 2, eine Stirnwand 3, Seitenwände 4 und eine durch Flügeltüren 5 gebildete Rückwand 6 und umschließt so einen Laderaum zur Aufnahme der zu transportierenden Güter. Der Aufbau 1 wird dabei durch das Nutzfahrzeugchassis 7 getragen, welches wiederum mit Achseinheiten 8 des Nutzfahrzeugs N verbunden ist. Zudem ist an dem Nutzfahrzeugchassis 7 eine Aufnahme 9 zum temporären Verstauen von länglichen Ausrüstungskomponenten während der Fahrt befestigt. Diese Aufnahme 9 ist an der in Fahrtrichtung gesehen linken Seite des Sattelaufliegers angeordnet und kann von dieser Seite be- und entladen werden. Es ist jedoch ebenso möglich die Aufnahme 9 an der rechten Seite des Sattelaufliegers anzuordnen oder an beiden Seiten des Nutzfahrzeugs N jeweils eine Aufnahme 9 anzuordnen. Darüber hinaus ist die Aufnahme 9 im dargestellten und insoweit bevorzugten Ausführungsbeispiel in Fahrtrichtung gesehen vor der vordersten Achseinheit 8 des Sattelaufliegers und horizontal unterhalb des Aufbaus 1 bzw. unterhalb des Laderaums angeordnet.

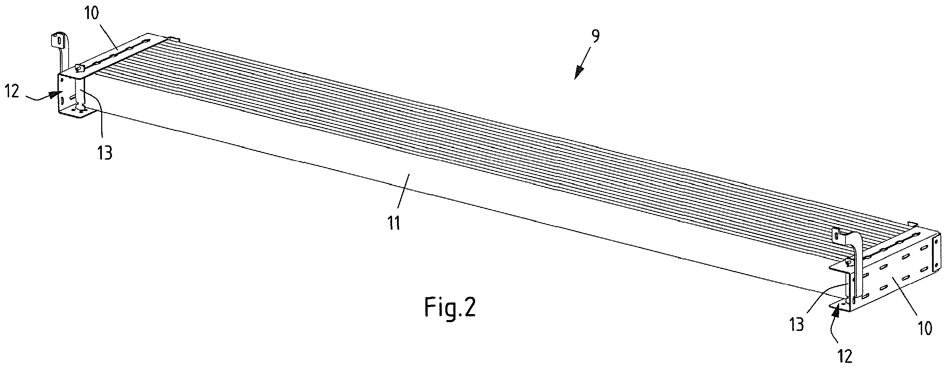

In der Fig. 2 ist die Aufnahme 9 des Nutzfahrzeugs N vergrößert in einer perspektivischen Ansicht dargestellt. Die Aufnahme 9 umfasst zwei horizontal gegenüberliegende Aufnahmeelemente 10, die jeweils einen U-förmigen Querschnitt aufweisen. In den Aufnahmeelementen 10 sind Ausrüstungskomponenten 11 in Form von Aufsatzlatten gehalten. Dabei sind die Ausrüstungskomponenten 11 jeweils mit einem Abschnitt eines Längsendes in dem einen Aufnahmeelement 10 und mit einem Abschnitt des gegenüberliegenden Längsendes in dem anderen Aufnahmeelement 10 aufgenommen. Um die Aufnahme 9 be- und entladen zu können, weisen die Aufnahmeelemente 10 jeweils eine, insbesondere seitlich angeordnete, Aufnahmeöffnung 12 auf, durch die die Endabschnitte der Ausrüstungskomponenten 11 in die Aufnahmeelemente 10 eingeführt bzw. daraus entnommen werden können. Diese Aufnahmeöffnungen 12 sind den Längsseiten des Nutzfahrzeugs N zugeordnet. Damit die Ausrüstungskomponenten 11, insbesondere während der Fahrt des Nutzfahrzeugs N, nicht versehentlich aus der Aufnahme 9 herausfallen oder herausrutschen, ist an jedem der beiden Aufnahmeelemente 10 eine Verschlusslasche 13 vorgesehen.

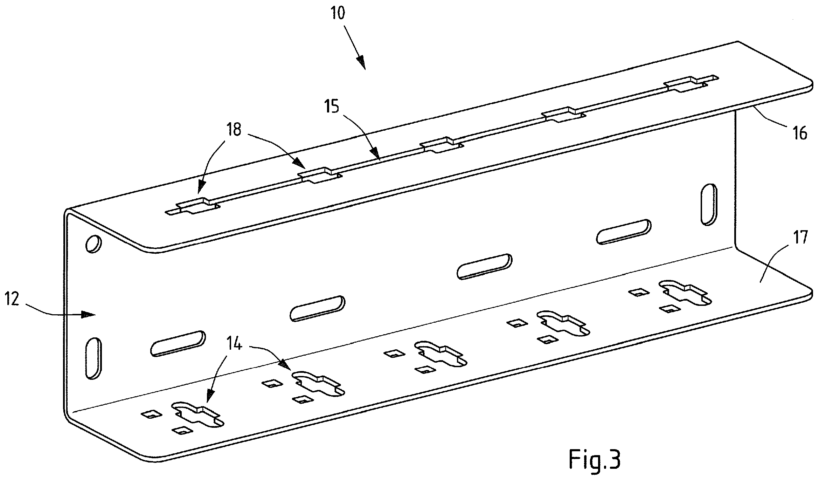

In der Fig. 3 ist ein Aufnahmeelement 10 der Aufnahme 9 vergrößert in einer perspektivischen Ansicht dargestellt. Das, jedenfalls im Querschnitt, U-förmig ausgebildete Aufnahmeelement 10 weist mehrere Arretierungselemente 14 in Form von separaten Öffnungen auf, die unterschiedlich weit von der Aufnahmeöffnung 12 beabstandet sind. Über die Arretierungselemente 14 kann die Verschlusslasche 13 in unterschiedlichen Positionen jeweils formschlüssig an dem Aufnahmeelement 10 arretiert werden. Zudem weist das Aufnahmeelement 10 eine Längsführung 15 in Form eines Längsführungsformschlitzes auf, entlang derer die Verschlusslasche 13 unverlierbar und verstellbar gehalten vorgesehen ist. Dabei ist die Längsführung 15 an einem oberen Schenkel 16 des Aufnahmeelements 10 und sind die Arretierungselemente 14 an einem unteren Schenkel 17 des Aufnahmeelements 10 derart angeordnet, dass die Längsführung 15 den Arretierungselementen 14 gegenüberliegt. Die beiden Schenkel 16, 17 sind dabei vorzugsweise parallel zueinander ausgerichtet. Die Längsführung 15 weist wiederum mehrere Verbreiterungen 18 bzw. Aufweitungen auf, die jeweils einem der Arretierungselemente 14 gegenüberliegen und diesem zugeordnet sind, so dass bei dem dargestellten und insoweit bevorzugten Aufnahmeelement 10 die Anzahl der Verbreiterungen 18 der Längsführung 15 der Anzahl der Arretierungselemente 14 entspricht.

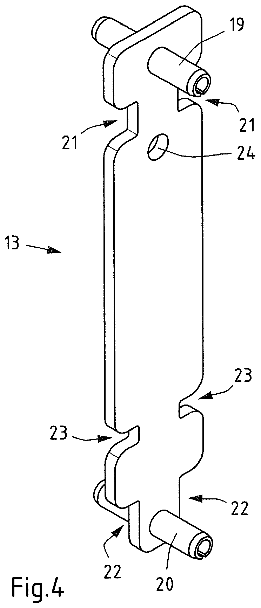

In der Fig. 4 ist die Verschlusslasche 13 der Aufnahme 9 vergrößert in einer perspektivischen Ansicht dargestellt. Die Verschlusslasche 13 weist ein oberes Anschlagelement 19 und ein unteres Anschlagelement 20 auf, um die Verschlusslasche 13 unverlierbar entlang der Längsführung 15 zu halten. Die beiden Anschlagelemente 19, 20 sind dabei in Form von Spannhülsen ausgebildet und jeweils in einer Bohrung der Verschlusslasche 13 kraftschlüssig mit dieser verbunden. Zudem weist die Verschlusslasche 13 einen oberen Verjüngungsabschnitt 21 auf, der als lokale Einschnürung ausgebildet ist, so dass die Verschlusslasche 13 wenigstens in den Verbreiterungen 18 der Längsführung 15 um die Längsachse der Verschlusslasche 13 gedreht werden kann und das Aufnahmeelement 10 bzw. die Ränder der Längsführung 15 dabei in den oberen Verjüngungsabschnitt 21 bzw. die entsprechende lokale Einschnürung eingreifen können.

Die Verschlusslasche 13 weist zudem einen unteren Verjüngungsabschnitt 22 auf, der so geformt ist, dass die Verschlusslasche 13 in den Arretierungselementen 14 um die Längsachse der Verschlusslasche 13 gedreht werden kann und das Aufnahmeelement 10 bzw. die Ränder des Arretierungselements 14 in den unteren Verjüngungsabschnitt 22 eingreifen können. Diese Drehung ist selbstverständlich ausgeschlossen, wenn das untere Anschlagelement 20 formschlüssig in dem jeweiligen Arretierungselement 14 angeordnet ist.

In dem dargestellten und insoweit bevorzugten Ausführungsbeispiel weist die Verschlusslasche 13 zusätzlich einen mittleren, zwischen dem oberen Verjüngungsabschnitt 21 und dem unteren Verjüngungsabschnitt 22 angeordneten mittleren Verjüngungsabschnitt 23 auf, der ebenfalls wie der obere Verjüngungsabschnitt 21 als lokale Einschnürung der Verschlusslasche 13 ausgebildet ist. Dieser mittlere Verjüngungsabschnitt 23 ist so geformt, dass die Verschlusslasche 13 in den Verbreiterungen 18 der Längsführung 15 um die Längsachse der Verschlusslasche 13 gedreht werden kann, wobei das Aufnahmeelement 10 bzw. die Ränder der Längsführung 15 in den mittleren Verjüngungsabschnitt 23 eingreifen. Darüber hinaus ist die dargestellte und insoweit bevorzugte Verschlusslasche 13 mit einer Diebstahlsicherungsbohrung 24 versehen, in der ein Diebstahlsicherungsmittel wie beispielsweise ein Bügelschloss befestigt werden kann.

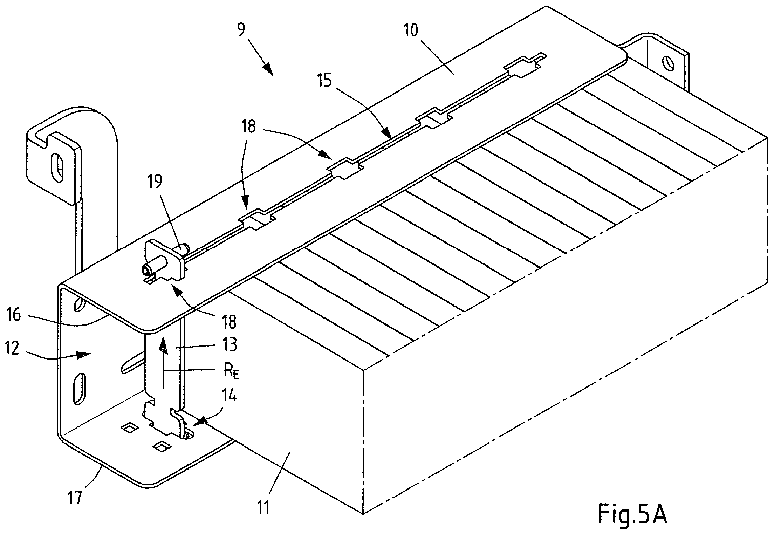

In den Fig. 5A - E ist ein Detail der Aufnahme 9 aus Fig. 2 dargestellt, wobei die Verschlusslasche 13 verschiedene Stellungen einnehmend abgebildet ist. In der Fig. 5A ist die Verschlusslasche 13 in einer Sicherungsstellung dargestellt, in der die Verschlusslasche 13 derart formschlüssig in dem Aufnahmeelement 10 arretiert ist, dass die Ausrüstungskomponenten 11 gegenüber einem versehentlichen seitlichen Herausrutschen aus der Aufnahme 9 bzw. aus dem Aufnahmeelement 10, insbesondere während der Fahrt, gesichert sind. In dieser Stellung ist der obere als lokale Einschnürung ausgebildete Verjüngungsabschnitt 21 der Verschlusslasche 13 derart in einer der Verbreiterungen 18 der Längsführung 15 angeordnet, dass dieser an der den Arretierungselementen 14 abgewandten Seite des oberen Schenkels 16 des Aufnahmeelements 10 anliegt. Der obere Schenkel 16 des Aufnahmeelements 10 greift formschlüssig in den oberen Verjüngungsabschnitt 21 ein. So ist die Verschlusslasche 13 an dem Aufnahmeelement 10 in zwei gegenläufigen Richtungen, wenigstens im Wesentlichen parallel zur Schwerkraftrichtung gehalten.

Grundsätzlich ist es dabei auch möglich, dass sich der obere Verjüngungsabschnitt 21 bis zum oberen Anschlagelement 19 erstreckt und von diesem begrenzt wird. Dann liegt das obere Anschlagelement 19 an der den Arretierungselementen 14 abgewandten Seite des oberen Schenkels 16 formschlüssig an und hält so die Verschlusslasche 13 an dem Aufnahmeelement 10 wenigstens im Wesentlichen in Schwerkraftrichtung fest. Der Formschluss in die Gegenrichtung wird dann wiederum von dem unteren Ende bzw. den dort vorgesehenen Anschlagflächen des oberen Verjüngungsabschnitts 21 gebildet.

Unabhängig davon ist in der Sicherungsstellung ein Verdrehen der Verschlusslasche 13 um deren Längsachse durch Formschluss der Verschlusslasche 13 mit dem der Verbreiterung 18 gegenüberliegenden Arretierungselement 14 blockiert. Von der Sicherungsstellung kann die Verschlusslasche 13 allerdings in eine parallel und entgegen der Schwerkraftrichtung ausgerichtete Entsicherungsrichtung R_{E} verschoben bzw. angehoben werden und so in eine Verschlussstellung verstellt werden.

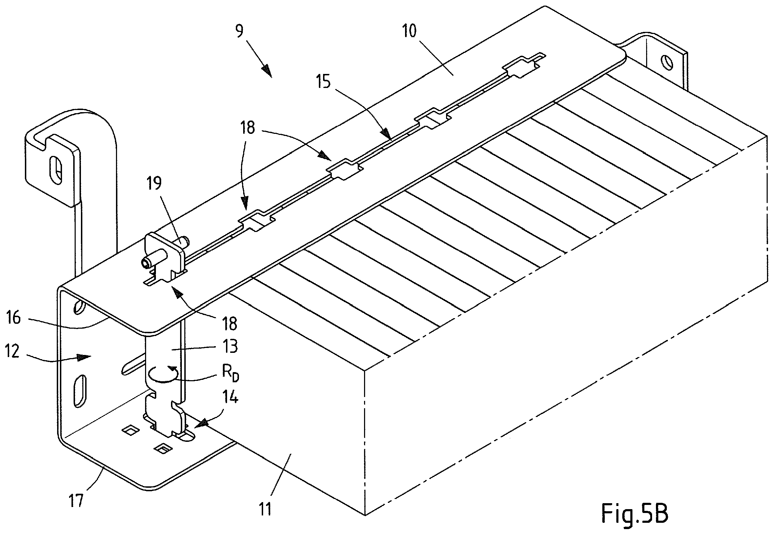

In der in Fig. 5B dargestellten Verschlussstellung sichert die Verschlusslasche 13 die Ausrüstungskomponenten 11 weiterhin gegenüber einem Herausfallen bzw. einem seitlichen Herausrutschen aus der Ausnahmeöffnung 12. Die Verschlusslasche 13 ist in dieser Stellung allerdings nicht formschlüssig an dem Aufnahmeelement 10 gehalten, so dass die Verschlusslasche 13 aufgrund ihrer Gewichtskraft zurück in die Sicherungsstellung gelangt, wenn die Verschlusslasche 13 losgelassen wird. Darüber hinaus kann die Verschlusslasche 13 in der Verschlussstellung nicht weiter in die Entsicherungsrichtung verschoben werden, weil der obere Verjüngungsabschnitt 21 der Verschlusslasche 13 mit Anschlagflächen von unten an der den Arretierungselementen 14 zugewandten Seite des oberen Schenkels 16 des Aufnahmeelements 10 anliegt. In dieser Stellung ist allerdings der untere Verjüngungsabschnitt 22 der Verschlusslasche 13 auf Höhe des Arretierungselements 14 angeordnet. In dieser Verschlussstellung ermöglichen der obere Verjüngungsabschnitt 21 als auch der untere Verjüngungsabschnitt 22 ein Drehen der Verschlusslasche 13 um deren Längsachse in einer Drehrichtung R_{D}, so dass die Verschlusslasche 13 um ihre Längsachse gedreht und so in eine Zwischenstellung verstellt werden kann.

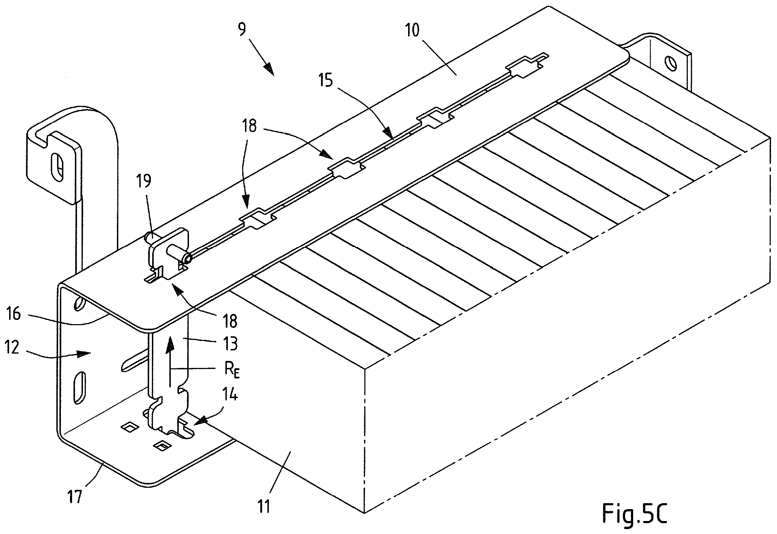

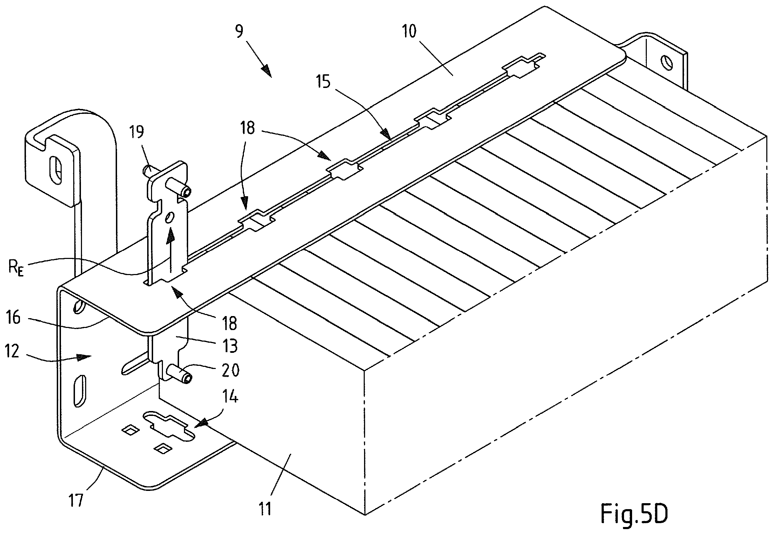

In der in Fig. 5C dargestellten Zwischenstellung sichert die Verschlusslasche 13 die Ausrüstungskomponenten 11 weiterhin gegenüber einem Herausfallen bzw. einem seitlichen Herausrutschen aus der Ausnahmeöffnung 12. Allerdings ist die Verschlusslasche 13 in der Zwischenstellung derart ausgerichtet, dass die Verschlusslasche 13 in der Entsicherungsrichtung R_{E} in eine Stellung verschoben werden kann, in der die Verschlusslasche 13 nicht mehr in dem Arretierungselement 14 angeordnet ist bzw. aus dem Arretierungselement 14 herausgezogen ist. Eine solche Stellung ist beispielhaft in Fig. 5D abgebildet. In dieser Stellung kann die Verschlusslasche 13 entlang der Längsführung 15 zu den anderen Arretierungselementen 14 bzw. Verbreiterungen 18 verschoben werden, um die Verschlusslasche 13 in einer anderen Sicherungsstellung arretieren zu können. Außerdem kann die Verschlusslasche 13 von dieser Stellung durch ein weiteres Verschieben in die Entsicherungsrichtung R_{E} in eine Freigabestellung verstellt werden. Das Verschieben entspricht bei dem dargestellten und insoweit bevorzugten Nutzfahrzeugchassis 7 einem teilweisen Herausziehen der Verschlusslasche 13 aus der Längsführung 15 nach oben.

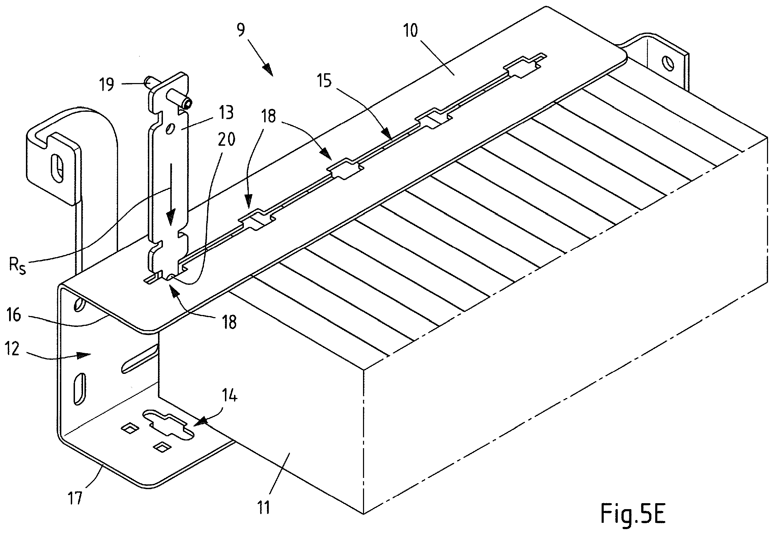

In der in der Fig. 5E dargestellten Freigabestellung gibt die Verschlusslasche 13 die Aufnahmeöffnung 12 derart frei, dass die Ausrüstungskomponenten 11 problemlos in die Aufnahme 9 eingeführt bzw. aus der Aufnahme 9 entnommen werden können. In dieser Stellung ist die Verschlusslasche 13 ebenfalls entlang der Längsführung 15 verschiebbar. Zudem ist die Verschlusslasche 13 in der Freigabestellung an dem Aufnahmeelement 10 nur insoweit festgelegt, als dass ein gänzliches Herausziehen der Verschlusslasche aus dem Aufnahmeelement 10 verhindert ist. Das untere Anschlagelement 20 verhindert durch eine formschlüssige Anlage an dem oberen Schenkel 16 des Aufnahmeelements 10 ein Herausrutschen der Verschlusslasche 13 aus der Längsführung 15. Sobald der Benutzer die Verschlusslasche 13 loslässt, gelangt die Verschlusslasche 13 aufgrund der Gewichtskraft in eine Stellung, in der sie das Be- bzw. Entladen der Aufnahme 9 behindert, wenn nicht gar verhindert. Von der Freigabestellung ist die Verschlusslasche 13 deshalb in mehrere Haltestellungen verstellbar, in denen die Verschlusslasche 13 ebenfalls die Aufnahmeöffnung 12 freigibt und zudem formschlüssig in der Schwerkraftrichtung bzw. einer Sicherungsrichtung Rs am Aufnahmeelement 10 arretiert ist.

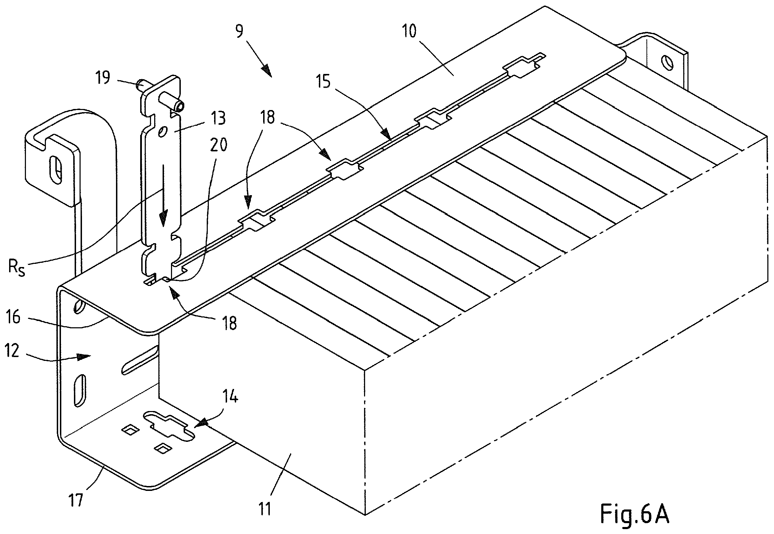

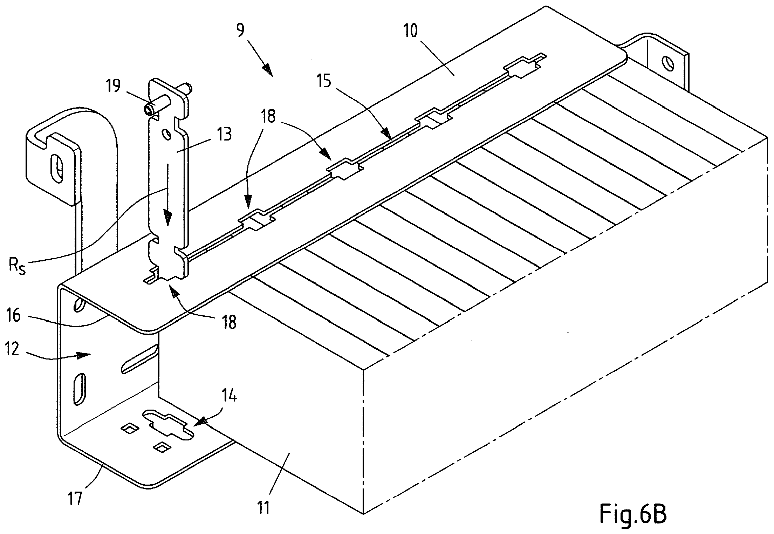

Eine erste dieser Haltestellungen ist in Fig. 6A dargestellt. In diese erste Haltestellung und zurück kann die Verschlusslasche 13 von der in der Fig. 5E dargestellten Freigabestellung durch Verschieben senkrecht zu einer durch die Sicherungsrichtung Rs und die Längsachse der Längsführung 15 aufgespannte Ebene verstellt werden. Der untere Verjüngungsabschnitt 22 der Verschlusslasche 13 ist in dieser Stellung in der Verbreiterung 18 der Längsführung 15 angeordnet und liegt teilweise mit entsprechenden Anschlagsflächen an der den Arretierungselementen 14 abgewandten Seite des oberen Schenkels 16 an, so dass die Verschlusslasche 13 in der Sicherungsrichtung R_{S} an dem Aufnahmeelement 10 gehalten ist. Eine zweite Haltestellung, in der der untere Verjüngungsabschnitt 22 der Verschlusslasche 13 in der Verbreiterung 18 angeordnet ist und teilweise mit entsprechenden Anschlagflächen an der den Arretierungselementen 14 abgewandten Seite des oberen Schenkels 16 anliegt, ist in der Fig. 6B dargestellt. In diese zweite Haltestellung und zurück ist die Verschlusslasche 13 von der in der Fig. 5E abgebildeten Freigabestellung durch Drehen der Verschlusslasche 13 um die Längsachse der Verschlusslasche 13 verstellbar. Dementsprechend ist die Verschlusslasche 13 in der in der Fig. 6B dargestellten zweiten Haltestellung besser gegenüber einem versehentlichen Verstellen in eine das Be- und Entladen der Aufnahme 9 behindernde Stellung gesichert als in der in der Fig. 6A dargestellten ersten Haltestellung. Denn in der zweiten Haltestellung kann die Verschlusslasche 13 nicht lediglich durch Verschieben in eine das Be- und Entladen behindernde Stellung gelangen, sondern muss wenigstens teilweise um ihre Längsachse gedreht werden.

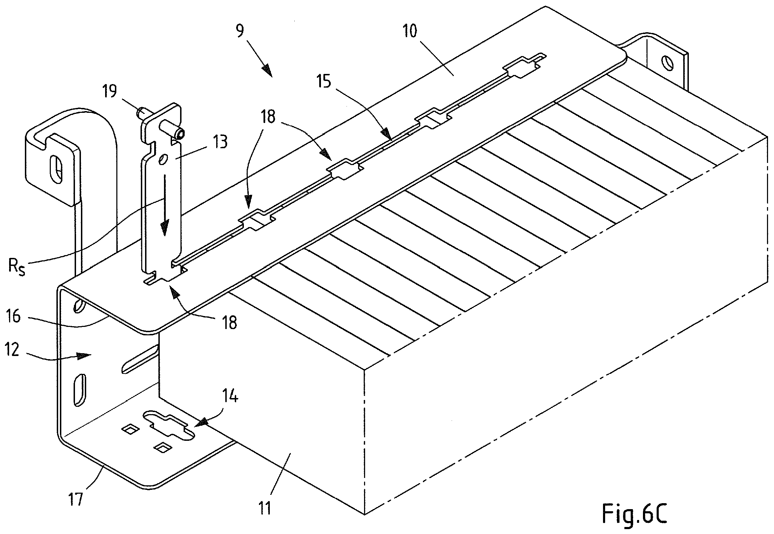

Eine dritte Haltestellung ist in der Fig. 6C dargestellt. In dieser dritten Haltestellung ist entgegen der Fig. 6A und 6B nicht der untere Verjüngungsabschnitt 22 der Verschlusslasche 13, sondern der als lokale Einschnürung ausgebildete mittlere Verjüngungsabschnitt 23 in der Verbreiterung 18 der Längsführung 15 angeordnet und liegt teilweise mit entsprechenden Anschlagsflächen an der den Arretierungselementen 14 abgewandten Seite des oberen Schenkels 16 an, so dass die Verschlusslasche 13 in der Sicherungsrichtung R_{S} formschlüssig an dem Aufnahmeelement 10 gehalten ist. Das führt dazu, dass in der in der Fig. 6C dargestellten dritten Haltestellung der Teil der Verschlusslasche 13, der auf der den Arretierungselementen 14 abgewandten Seite des oberen Schenkels 16 außerhalb der Längsführung 15 angeordnet ist, kleiner ist als in der ersten und zweiten Haltestellung. Auf diese Weise kann die Verschlusslasche 13 auch beim Nutzfahrzeugchassis 7 in eine Haltestellung verstellt werden, bei der die Verschlusslasche 13 aufgrund von Platzmangel nicht in die Haltestellungen gemäß der Fig. 6A und 6B verstellt werden kann. Wenn der mittlere Verjüngungsabschnitt 23 in der Verbreiterung 18 angeordnet ist, kann die Verschlusslasche 13 selbstverständlich auch um ihre Längsachse gedreht werden und so analog zu der in der Fig. 6B dargestellten zweiten Haltestellung in eine Haltestellung verstellt werden, in der die Verschlusslasche 13 besser gegenüber einem versehentlichen Verstellen in eine das Be- und Entladen der Aufnahme 9 behindernde Stellung gesichert ist.

Die beiden Anschlagelemente 19, 20 sind so ausgebildet und an der Verschlusslasche 13 befestigt, dass ein Entfernen bzw. ein vollständiges Herausziehen der Verschlusslasche 13 sowohl nach oben als auch nach unten aus der Längsführung 15 verhindert wird, so dass ein versehentliches Herunterfallen und/oder ein Verlust der Verschlusslasche 13 ausgeschlossen ist.

### Bezugszeichenliste

- 1: Aufbau
- 2: Dach
- 3: Stirnwand
- 4: Seitenwand
- 5: Flügeltür
- 6: Rückwand
- 7: Nutzfahrzeugchassis
- 8: Achseinheit
- 9: Aufnahme
- 10: Aufnahmeelement
- 11: Ausrüstungskomponenten
- 12: Aufnahmeöffnung
- 13: Verschlusslasche
- 14: Arretierungselement
- 15: Längsführung
- 16: oberer Schenkel
- 17: unterer Schenkel
- 18: Verbreiterung
- 19: oberes Anschlagelement
- 20: unteres Anschlagelement
- 21: oberer Verjüngungsabschnitt
- 22: unterer Verjüngungsabschnitt
- 23: mittlerer Verjüngungsabschnitt
- 24: Diebstahlsicherungsbohrung
- Z: Zugmaschine
- N: Nutzfahrzeug
- R_{E}: Entsicherungsrichtung
- R_{D}: Drehrichtung
- Rs: Sicherungsrichtung

## Patentansprüche

1. Nutzfahrzeugchassis (7), insbesondere eines Lastkraftwagens, Anhängers oder Sattelaufliegers, mit einer Aufnahme (9) zum temporären Verstauen von länglichen Ausrüstungskomponenten (11) während der Fahrt, umfassend wenigstens ein Aufnahmeelement (10) zum Aufnehmen eines Endabschnitts der Ausrüstungskomponenten (11), wobei das Aufnahmeelement (10) eine seitliche Aufnahmeöffnung (12) zum Einführen und/oder Entnehmen der Ausrüstungskomponenten (11) aufweist,
**dadurch gekennzeichnet, dass**
das Aufnahmeelement (10) wenigstens zwei in unterschiedlichem Abstand zur Aufnahmeöffnung (12) angeordnete Arretierungselemente (14) zum formschlüssigen Arretieren einer Verschlusslasche (13) in wenigstens zwei unterschiedlich weit von der Aufnahmeöffnung (12) beabstandeten Sicherungsstellungen jeweils zum Sichern der Ausrüstungskomponenten (11) gegenüber einem versehentlichen Herausrutschen aus der Aufnahmeöffnung (12) aufweist, dass die Verschlusslasche (13) von den Sicherungsstellungen in wenigstens eine die Aufnahmeöffnung (12) zum Einführen und/oder Entnehmen der Ausrüstungskomponenten (11) freigebende Freigabestellung und zurück verstellbar ist und
die Verschlusslasche (13) unverlierbar und zwischen den Sicherungsstellungen verstellbar entlang wenigstens einer Längsführung (15) gehalten ist.

2. Nutzfahrzeugchassis nach Anspruch 1,
**dadurch gekennzeichnet, dass**
die Verschlusslasche (13) von den Sicherungsstellungen in wenigstens zwei Freigabestellungen und zurück verstellbar ist und dass, vorzugsweise, die Verschlusslasche (13) unverlierbar und zwischen den Freigabestellungen verstellbar entlang wenigstens einer Längsführung (15) gehalten ist.

3. Nutzfahrzeugchassis nach Anspruch 1 oder 2,
**dadurch gekennzeichnet, dass**
die Verschlusslasche (13) von den Sicherungsstellungen jeweils in wenigstens eine die Ausrüstungskomponenten (11) gegenüber einem versehentlichen Herausrutschen aus der Aufnahmeöffnung (12) sichernde Zwischenstellung und zurück verstellbar ist, dass die Verschlusslasche (13) in den Sicherungsstellungen in wenigstens einer Entsicherungsrichtung (R_{E}) formschlüssig arretiert und in den Zwischenstellungen die formschlüssige Arretierung der Verschlusslasche (13) in die wenigstens eine Entsicherungsrichtung (R_{E}) aufgehoben ist und dass, vorzugsweise, die Verschlusslasche (13) aus den Zwischenstellungen in die Freigabestellungen und zurück verstellbar ist.

4. Nutzfahrzeugchassis nach Anspruch 3,
**dadurch gekennzeichnet, dass**
die Verschlusslasche (13) von den Sicherungsstellungen wenigstens durch Verschieben, vorzugsweise gegen die Schwerkraft und/oder eine Federkraft, Verdrehen, vorzugsweise um die Längsachse der Verschlusslasche (13), und/oder Schwenken in die Zwischenstellungen verstellbar ist.

5. Nutzfahrzeugchassis nach Anspruch 3 oder 4,
**dadurch gekennzeichnet, dass**
die Verschlusslasche (13) von den Zwischenstellungen wenigstens durch Verschieben, vorzugsweise gegen die Schwerkraft und/oder eine Federkraft, Verdrehen, vorzugsweise um die Längsachse der Verschlusslasche (13), und/oder Schwenken in die wenigstens eine Freigabestellung verstellbar ist und dass, vorzugsweise, sich die Verstellbewegungen zum Verstellen der Verschlusslasche (13) von den Sicherungsstellungen in die Zwischenstellungen und von den Zwischenstellungen in die wenigstens eine Freigabestellung unterscheiden und dass, weiter vorzugsweise, die Verstellbewegungen zum Verstellen der Verschlusslasche (13) von den Sicherungsstellungen in die Zwischenstellungen und von den Zwischenstellungen in die wenigstens eine Freigabestellung wenigstens im Wesentlichen senkrecht zueinander ausgerichtet sind.

6. Nutzfahrzeugchassis nach einem der Ansprüche 3 bis 5,
**dadurch gekennzeichnet, dass**
die Verschlusslasche (13) beim Verstellen von den Sicherungsstellungen in die Zwischenstellungen und zurück jeweils eine Verschlussstellung einnehmend ausgebildet ist, dass die Verschlusslasche (13) in den Verschlussstellungen in der Entsicherungsrichtung (R_{E}) formschlüssig arretiert ist und dass, vorzugsweise, die Verstellbewegungen der Verschlusslasche (13) von der Sicherungsstellung in die Verschlussstellung und von der Verschlussstellung in die Zwischenstellung wenigstens unterschiedlich zueinander, insbesondere wenigstens im Wesentlichen senkrecht zueinander, ausgerichtet sind.

7. Nutzfahrzeugchassis nach Anspruch 6,
**dadurch gekennzeichnet, dass**
die Verschlusslasche (13) von der Sicherungsstellung in die Verschlussstellung und/oder von der Verschlussstellung in die Zwischenstellung wenigstens durch Verschieben, vorzugsweise gegen die Schwerkraft und/oder eine Federkraft, Verdrehen, vorzugsweise um die Längsachse der Verschlusslasche (13), und/oder Schwenken verstellbar ist.

8. Nutzfahrzeugchassis nach einem der Ansprüche 1 bis 7,
**dadurch gekennzeichnet, dass**
die Verschlusslasche (13) von der wenigstens einen Freigabestellung in wenigstens eine die Aufnahmeöffnung (12) zum Einführen und/oder Entnehmen der Ausrüstungskomponenten (11) freigebende Haltestellung und zurück verstellbar ist, dass die Verschlusslasche (13) in der wenigstens einen Haltestellung jeweils wenigstens in einer Sicherungsrichtung (Rs) formschlüssig arretiert ist und dass, vorzugsweise, in der wenigstens einen Freigabestellung die formschlüssige Arretierung der Verschlusslasche (13) wenigstens im Wesentlichen in die Sicherungsrichtung (Rs) aufgehoben ist.

9. Nutzfahrzeugchassis nach Anspruch 8,
**dadurch gekennzeichnet, dass**
die Verschlusslasche (13) von der Freigabestellung in die Haltestellung und zurück wenigstens durch Verschieben, vorzugsweise gegen die Schwerkraft und/oder eine Federkraft, Verdrehen, vorzugsweise um die Längsachse der Verschlusslasche (13), und/oder Schwenken verstellbar ist und/oder dass die Verschlusslasche (13) von der Freigabestellung in die Haltestellung und zurück wenigstens durch eine Haltebewegung wenigstens im Wesentlichen senkrecht zur Sicherungsrichtung (Rs) verstellbar ist.

10. Nutzfahrzeugchassis (7) nach einem der Ansprüche 1 bis 9,
**dadurch gekennzeichnet, dass**
die Längsführung (15) ein in der Aufnahme (9) angeordneter und die Verschlusslasche (13) wenigstens teilweise aufnehmender Längsführungsformschlitz ist und/oder dass die Längsführung (15) ein sich durch eine, vorzugsweise als Längsführungsformschlitz ausgebildete, Öffnung der Verschlusslasche (13) erstreckendes Längsführungsprofil ist.

11. Nutzfahrzeugchassis nach Anspruch 10,
**dadurch gekennzeichnet, dass**
der Längsführungsformschlitz wenigstens eine Verbreiterung (18) zur Aufnahme der Verschlusslasche (13) und/oder des Längsführungsprofils in der wenigstens einen Haltestellung der Verschlusslasche (13) aufweist.

12. Nutzfahrzeugchassis nach einem der Ansprüche 1 bis 11,
**dadurch gekennzeichnet, dass**
die Verschlusslasche (13) wenigstens in den Sicherungsstellungen und, vorzugsweise, in den Verschlussstellungen formschlüssig in den Arretierungselementen (14), insbesondere separaten Öffnungen, des Aufnahmeelements (10) aufgenommen sind und dass, vorzugsweise die Arretierungselemente (14), insbesondere die separaten Öffnungen, der Längsführung (15) gegenüberliegend angeordnet sind.

13. Nutzfahrzeugchassis nach einem der Ansprüche 1 bis 12,
**dadurch gekennzeichnet, dass**
das Aufnahmeelement (10) U-förmig ausgebildet ist, dass, vorzugsweise, die Längsführung (15) an einem Schenkel (16) des Aufnahmeelements (10) vorgesehen ist und dass, weiter vorzugsweise, die Arretierungselemente (14), insbesondere die separaten Öffnungen, an einem anderen, insbesondere gegenüberliegenden, Schenkel (17) des Aufnahmeelements (10) angeordnet sind.

14. Nutzfahrzeugchassis nach einem der Ansprüche 1 bis 13,
**dadurch gekennzeichnet, dass**
die Verschlusslasche (13) wenigstens einen oberen Verjüngungsabschnitt derart aufweist, so dass die Verschlusslasche (13) im Bereich des wenigstens einen oberen Verjüngungsabschnitts in dem Längsführungsformschlitz um die Längsachse der Verschlusslasche (13) drehbar und wenigstens teilweise, insbesondere in einer Richtung parallel zur Schwerkraft, formschlüssig am Aufnahmeelement (10) gehalten ist und/oder dass die Verschlusslasche (13) wenigstens einen unteren Verjüngungsabschnitt derart aufweist, so dass die Verschlusslasche (13) im Bereich des wenigstens einen unteren Verjüngungsabschnitts wenigstens in einem Arretierungselement (14), insbesondere in einer separaten Öffnung, um die Längsachse der Verschlusslasche (13) drehbar und wenigstens teilweise, insbesondere in einer Richtung parallel zur Schwerkraft, formschlüssig am Aufnahmeelement (10) gehalten ist.

15. Nutzfahrzeugchassis nach einem der Ansprüche 1 bis 14,
**dadurch gekennzeichnet, dass**
die Verschlusslasche (13) wenigstens einen oberen, vorzugsweise stiftförmig zu wenigstens einer Seite der Verschlusslasche (13) vorstehenden, Anschlagabschnitt (19) zum wenigstens teilweisen formschlüssigen Halten der Verschlusslasche (13), insbesondere in einer Richtung parallel zur Schwerkraft und/oder an einem Randbereich der Längsführung (15), aufweist und/oder dass die Verschlusslasche (13) wenigstens einen unteren, vorzugsweise stiftförmig zu wenigstens einer Seite der Verschlusslasche (13) vorstehenden, Anschlagabschnitt (20) zum wenigstens teilweisen formschlüssigen Halten der Verschlusslasche (13), insbesondere in einer Richtung parallel zur Schwerkraft und/oder an einem Randbereich der Längsführung (15), aufweist.

## Claims

1. Commercial vehicle chassis (7), in particular of a truck, trailer or semitrailer, having a receptacle (9) for temporarily stowing elongated equipment components (11) while the vehicle is in motion, comprising at least one receiving element (10) for receiving an end portion of the equipment components (11), the receiving element (10) having a lateral receiving opening (12) for inserting and/or removing the equipment components (11)
**characterized in that**
the receiving element (10) has at least two locking elements (14) arranged at different distances from the receiving opening (12) for positively locking a locking tab (13) in at least two securing positions spaced at different distances from the receiving opening (12), in each case for securing the equipment components (11) against accidental slipping out of the receiving opening (12), that the locking tab (13) is adjustable from the securing positions into at least one release position releasing the receiving opening (12) for insertion and/or
removal of the equipment components (11) and back, and the locking tab (13) is held captive and adjustable between the securing positions along at least one longitudinal guide (15).

2. Commercial vehicle chassis according to claim 1,
**characterized in that**
the locking tab (13) is adjustable from the securing positions into at least two release positions and back, and that, preferably, the locking tab (13) is held captive and adjustable between the release positions along at least one longitudinal guide (15).

3. Commercial vehicle chassis according to claim 1 or 2,
**characterized in that**
the locking tab (13) can be adjusted from the securing positions in each case into at least one intermediate position securing the equipment components (11) against accidental slipping out of the receiving opening (12) and back, **in that**, in the securing positions, the locking tab (13) is positively locked in at least one unlocking direction (R_{E}) and, in the intermediate positions, the positive locking of the locking tab (13) in the at least one unlocking direction (R_{E}) is released, and **in that**, preferably, the locking tab (13) can be adjusted from the intermediate positions into the release positions and back.

4. Commercial vehicle chassis according to claim 3,
**characterized in that**
the locking tab (13) is adjustable from the securing positions at least by displacement, preferably against the force of gravity and/or a spring force, rotation, preferably about the longitudinal axis of the locking tab (13), and/or pivoting into the intermediate positions.

5. Commercial vehicle chassis according to claim 3 or 4,
**characterized in that**
the locking tab (13) is adjustable from the intermediate positions at least by displacement, preferably against the force of gravity and/or a spring force, rotation, preferably about the longitudinal axis of the locking tab (13), and/or pivoting into the at least one release position, and **in that**, preferably, the adjustment movements for adjusting the locking tab (13) from the securing positions into the intermediate positions and from the intermediate positions into the at least one release position differ, and **in that**, further preferably, the adjustment movements for adjusting the locking tab (13) from the securing positions into the intermediate positions and from the intermediate positions into the at least one release position are aligned at least substantially perpendicular to one another.

6. Commercial vehicle chassis according to any one of claims 3 to 5,
**characterized in that**
the locking tab (13) is designed to assume a locking position in each case during adjustment from the securing positions into the intermediate positions and back, **in that** the locking tab (13) is positively locked in the locking positions in the unlocking direction (R_{E}), and **in that**, preferably, the adjustment movements of the locking tab (13) from the securing position into the locking position and from the locking position into the intermediate position are aligned at least differently from one another, in particular at least substantially perpendicularly to one another.

7. Commercial vehicle chassis according to claim 6,
**characterized in that**
the locking tab (13) is adjustable from the securing position into the locking position and/or from the locking position into the intermediate position at least by displacement, preferably against the force of gravity and/or a spring force, rotation, preferably about the longitudinal axis of the locking tab (13), and/or pivoting.

8. Commercial vehicle chassis according to any one of claims 1 to 7,
**characterized in that**
the locking tab (13) is adjustable from the at least one release position into at least one holding position releasing the receiving opening (12) for insertion and/or removal of the equipment components (11) and back, **in that**, in the at least one holding position, the locking tab (13) is in each case positively locked at least in a securing direction (Rs), and **in that**, preferably, in the at least one release position, the positive locking of the locking tab (13) is released at least substantially in the securing direction (Rs).

9. Commercial vehicle chassis according to claim 8,
**characterized in that**
the locking tab (13) is adjustable from the release position to the holding position and back at least by displacement, preferably against the force of gravity and/or a spring force, rotation, preferably about the longitudinal axis of the locking tab (13), and/or pivoting and/or **in that** the locking tab (13) is adjustable from the release position to the holding position and back at least by a holding movement at least substantially perpendicular to the securing direction (Rs).

10. Commercial vehicle chassis (7) according to any one of claims 1 to 9,
**characterized in that**
the longitudinal guide (15) is a longitudinal guide shape slot arranged in the receptacle (9) and at least partially receiving the locking tab (13) and/or **in that** the longitudinal guide (15) is a longitudinal guide profile extending through an opening, preferably formed as a longitudinal guide shape slot, of the locking tab (13).

11. Commercial vehicle chassis of claim 10,
**characterized in that**
the longitudinal guide shape slot has at least one enlargement (18) for receiving the locking tab (13) and/or the longitudinal guide profile in the at least one holding position of the locking tab (13).

12. Commercial vehicle chassis according to any one of claims 1 to 11,
**characterized in that**
the locking tab (13) is positively received in the locking elements (14), in particular separate openings, of the receiving element (10) at least in the securing positions and, preferably, in the locking positions, and **in that**, preferably, the locking elements (14), in particular the separate openings, are arranged opposite the longitudinal guide (15).

13. Commercial vehicle chassis according to any one of claims 1 to 12,
**characterized in that**
the receiving element (10) is U-shaped, **in that**, preferably, the longitudinal guide (15) is provided on a limb (16) of the receiving element (10), and **in that**, further preferably, the locking elements (14), in particular the separate openings, are arranged on another, in particular opposite, limb (17) of the receiving element (10).

14. Commercial vehicle chassis according to any one of claims 1 to 13,
**characterized in that**
the locking tab (13) has at least one upper tapered section such that the locking tab (13) is rotatable in the region of the at least one upper tapered section in the longitudinal guide shape slot about the longitudinal axis of the locking tab (13) and is held at least partially, in particular in a direction parallel to the force of gravity, positively on the receiving element (10), and/or **in that** the locking tab (13) has at least one lower tapered section such that the locking tab (13) is held in the region of the at least one lower tapered section rotatable about the longitudinal axis of the locking tab (13) at least in a locking element (14), in particular in a separate opening, and is held at least partially, in particular in a direction parallel to the force of gravity, positively on the receiving element (10).

15. Commercial vehicle chassis according to any one of claims 1 to 14,
**characterized in that**
the locking tab (13) has at least one upper stop section (19), preferably projecting in the form of a pin to at least one side of the locking tab (13), for at least partially holding the locking tab (13) in a form-fitting manner, in particular in a direction parallel to the force of gravity and/or on an edge region of the longitudinal guide (15), and/or **in that** the locking tab (13) has at least one lower stop section (20), preferably projecting in the form of a pin to at least one side of the locking tab (13), for at least partially holding the locking tab (13) in a form-fitting manner, in particular in a direction parallel to the force of gravity and/or on an edge region of the longitudinal guide (15).

## Revendications

1. Châssis de véhicule utilitaire (7), notamment d'un camion, d'une remorque ou d'une semi-remorque, pourvu d'un logement (9) permettant le stockage temporaire de composants de l'équipement allongés (11) pendant le trajet, comportant au moins un élément récepteur (10) pour le logement d'une section d'extrémité des composants d'équipement (11), l'élément récepteur (10) présentant une ouverture de réception (12) latérale pour l'introduction et/ou le retrait des composants d'équipement (11),
**caractérisé en ce que**
l'élément récepteur (10) présente au moins deux éléments de blocage (14) agencés à au moins deux distances différentes par rapport à l'ouverture de réception (12) pour le blocage, par complémentarité de forme, d'une languette de fermeture (13) dans au moins deux positions de fixation espacées différemment par rapport à l'ouverture de réception (12), respectivement pour la fixation des composants d'équipement (11) contre un glissement par inadvertance hors de l'ouverture de réception (12), **en ce que** la languette de fermeture (13) est susceptible d'être déplacée des positions de fixation dans au moins une position de déblocage libérant l'ouverture de réception (12) pour l'introduction et/ou le
retrait des composants d'équipement (11), et inversement, et la languette de fermeture (13) est retenue imperdable et pouvant être déplacée entre les positions de fixation le long d'au moins un guidage longitudinal (15).

2. Châssis de véhicule utilitaire selon la revendication 1,
**caractérisé en ce que**
la languette de fermeture (13) peut être déplacée des positions de fixation dans au moins deux positions de déblocage et inversement et **en ce que**, de préférence, la languette de fermeture (13) est retenue imperdable et pouvant être déplacée le long d'au moins un guidage longitudinal (15) entre les positions de déblocage.

3. Châssis de véhicule utilitaire selon la revendication 1 ou 2,
**caractérisé en ce que**
la languette de fermeture (13) est susceptible d'être déplacée des positions de fixation dans respectivement au moins une position intermédiaire empêchant les composants d'équipement (11) de glisser par inadvertance hors de l'ouverture de réception (12) et inversement et **en ce que** la languette de fermeture (13) est bloquée, par complémentarité de forme, dans les positions de fixation dans au moins une direction de déblocage (R_{E}) et dans les positions intermédiaires, le blocage par complémentarité de forme de la languette de fermeture (13) est supprimé dans au moins une direction de déblocage (R_{E}) et **en ce que**, de préférence, la languette de fermeture (13) peut être déplacée des positions intermédiaires dans les positions de déblocage et inversement.

4. Châssis de véhicule utilitaire selon la revendication 3,
**caractérisé en ce que**
la languette de fermeture (13) peut être déplacée des positions de fixation, au moins par déplacement, de préférence contre la force de gravité et/ou une force de ressort, par rotation, de préférence autour de l'axe longitudinal de la languette de fermeture (13), et/ou par pivotement dans les positions intermédiaires.

5. Châssis de véhicule utilitaire selon la revendication 3 ou 4,
**caractérisé en ce que**
la languette de fermeture (13) est susceptible d'être déplacée des positions intermédiaires, au moins par déplacement, de préférence contre la force de gravité et/ou une force de ressort, par rotation, de préférence autour de l'axe longitudinal de la languette de fermeture (13), et/ou par pivotement dans au moins une position de déblocage et **en ce que**, de préférence, les mouvements de déplacement pour le déplacement de la languette de fermeture (13) des positions de fixation dans les positions intermédiaires et des positions intermédiaires dans au moins une position de déblocage sont différents l'un de l'autre et **en ce que**, de préférence encore, les mouvements de déplacement servant à déplacer la languette de fermeture (13) des positions de fixation dans les positions intermédiaires et des positions intermédiaires dans au moins une position de déblocage sont orientés au moins sensiblement perpendiculairement les uns aux autres.

6. Châssis de véhicule utilitaire selon l'une des revendications 3 à 5,
**caractérisé en ce que**
la languette de fermeture (13) est conçue pour se retrouver dans une position de fermeture lors du déplacement des positions de fixation dans les positions intermédiaires et inversement, **en ce que** la languette de fermeture (13) est bloquée, par complémentarité de forme, dans les position de fermeture dans la direction de déblocage (R_{E}) et **en ce que**, de préférence, les mouvements de déplacement de la languette de fermeture (13) de la position de fixation à la position de fermeture et de la position de fermeture à la position intermédiaire sont orientés au moins différemment les uns des autres, notamment au moins sensiblement perpendiculairement les uns aux autres.

7. Châssis de véhicule utilitaire selon la revendication 6,
**caractérisé en ce que**
la languette de fermeture (13) peut être déplacée, de la position de fixation à la position de fermeture et/ou de la position de fermeture à la position intermédiaire, au moins par déplacement, de préférence contre la force de gravité et/ou une force du ressort, par rotation, de préférence autour de l'axe longitudinal de la languette de fermeture (13) et/ou par pivotement.

8. Châssis de véhicule utilitaire selon l'une des revendications 1 à 7,
**caractérisé en ce que**
la languette de fermeture (13) peut être déplacée de ladite moins une position de déblocage dans au moins une position de retenue libérant les ouvertures de réception (12) pour l'introduction et/ou le retrait des composants d'équipement (11) et inversement, **en ce que** la languette de fermeture (13) est bloquée, par complémentarité de forme, dans au moins une position de retenu, respectivement dans au moins une direction de fixation (Rs) et **en ce que**, de préférence, dans ladite au moins une position de déblocage, le blocage, par complémentarité de forme, de la languette de fermeture (13) est supprimé, au moins sensiblement, dans la direction de fixation (Rs).

9. Châssis de véhicule utilitaire selon la revendication 8,
**caractérisée en ce que**
la languette de fermeture (13) peut être déplacée de la position de déblocage à la position de retenue et inversement, au moins par déplacement, de préférence contre la force de gravité et/ou une force de ressort, par rotation, de préférence autour de l'axe longitudinal de la languette de fermeture (13) et/ou par pivotement, et/ou **en ce que** la languette de fermeture (13) peut être déplacée de la position de déblocage à la position de retenue et inversement au moins par un mouvement de retenue, au moins sensiblement perpendiculaire à la direction de fixation (Rs).

10. Châssis de véhicule utilitaire (7) selon l'une des revendications 1 à 9,
**caractérisé en ce que**
le guidage longitudinal (15) est une fente de guidage longitudinale agencée dans le logement (9) et logeant au moins partiellement la languette de fermeture (13) et/ou **en ce que** le guidage longitudinal (15) est un profil de guidage longitudinal s'étendant à travers une ouverture, de préférence formée par une fente de guidage longitudinal, de la languette de fermeture (13).

11. Châssis de véhicule utilitaire selon la revendication 10,
**caractérisé en ce que**
la fente de guidage longitudinal présente au moins un élargissement (18) pour le logement de la languette de fermeture (13) et/ou du profil de guidage longitudinal dans au moins une position de retenue de la languette de fermeture (13).

12. Châssis de véhicule utilitaire selon l'une des revendications 1 à 11,
**caractérisé en ce que**
la languette de fermeture (13) est logée, par complémentarité de forme, dans les éléments de blocage (14), notamment dans les ouvertures séparées, de l'élément récepteur (10) au moins dans les positions de fixation et, de préférence, dans les positions de fermeture, et **en ce que**, de préférence, les éléments de blocage (14), notamment les ouvertures séparées, sont agencées opposées au guidage longitudinal (15).

13. Châssis de véhicule utilitaire selon l'une des revendications 1 à 12,
**caractérisé en ce que**
l'élément récepteur (10) est conçu en forme de U, **en ce que** le guidage longitudinal (15) est prévu de préférence sur une branche (16) de l'élément récepteur (10) et **en ce que**, de préférence, les éléments de blocage (14), notamment les ouvertures séparées, sont agencées sur une autre branche (17) de l'élément récepteur (10), notamment opposée.

14. Châssis de véhicule utilitaire selon l'une des revendications 1 à 13,
**caractérisé en ce que**
la languette de fermeture (13) présente au moins une section effilée supérieure de telle sorte que la languette de fermeture (13), dans la zone de ladite au moins une section effilée supérieure, est maintenue rotative dans la fente de guidage longitudinal autour de l'axe longitudinal de la languette de fermeture (13) et est retenue par complémentarité de forme sur l'élément récepteur (10) au moins partiellement, notamment dans une direction parallèle à la force de gravité, et/ou **en ce que** la languette de fermeture (13) présente au moins une section effilée inférieure de de telle sorte que la languette de fermeture (13), dans la zone de ladite au moins une section effilée inférieure, est maintenue rotative au moins dans un élément de blocage (14), notamment dans une ouverture séparée, autour de l'axe longitudinal de la languette de fermeture (13) et est retenue, par complémentarité de forme, sur l'élément récepteur (10) au moins partiellement, notamment dans une direction parallèle à la force de gravité.

15. Châssis de véhicule utilitaire selon l'une des revendications 1 à 14,
**caractérisé en ce que**
la languette de fermeture (13) présente au moins une section de butée (19) supérieure, de préférence en saillie en forme de goupille, sur au moins un côté de la languette de fermeture (13), pour retenir la languette de fermeture (13), au moins partiellement, par complémentarité de forme, notamment dans une direction parallèle à la force de gravité et/ou sur un zone de bordure du guidage longitudinal (15), et/ou **en ce que** la languette de fermeture (13) présente au moins une section de butée (20) inférieure, de préférence en saillie en forme de goupille, sur au moins un côté de la languette de fermeture (13) pour retenir la languette de fermeture (13), au moins partiellement, par complémentarité de forme, notamment dans une direction parallèle à la force de gravité et/ou sur un zone de bordure du guidage longitudinal (15).
